**Europäisches Patentamt**

**European Patent Office**

**Office européen des brevets**

(19)

(11) Veröffentlichungsnummer : **0 048 940**
**B1**

(12) **EUROPÄISCHE PATENTSCHRIFT**

(45) Veröffentlichungstag der Patentschrift :
09.01.85

(51) Int. Cl.⁴ : **H 04 Q   3/00**

(21) Anmeldenummer : **81107535.7**

(22) Anmeldetag : **22.09.81**

(54) **Teilnehmeranschlußschaltung.**

(30) Priorität : **29.09.80 DE 3036686**

(43) Veröffentlichungstag der Anmeldung :
**07.04.82 Patentblatt 82/14**

(45) Bekanntmachung des Hinweises auf die Patenterteilung : **09.01.85 Patentblatt 85/02**

(84) Benannte Vertragsstaaten :
**AT CH FR GB LI NL SE**

(56) Entgegenhaltungen :
**EP-A- 0 011 720**
**DE-A- 2 901 739**
**FR-A- 2 329 126**
**IBM TECHNICAL DISCLOSURE BULLETIN, Band 20,
Nr. 3, August 1977, Seiten 1045-1046 New York, U.S.A.
M. FERRY: "Trip detecting circuit"
ELECTRICAL COMMUNICATION, Band 44, Nr. 4,
1969, Seiten 340-347 London, G.B. D. FISCHBUCH et
al.: "Balanced electronic receiver for loop signaling"**

(73) Patentinhaber : **Siemens Aktiengesellschaft
Berlin und München Wittelsbacherplatz 2
D-8000 München 2 (DE)**

(72) Erfinder : **Kopetzky, Horst
Lannerstrasse 11
D-8025 Unterhaching (DE)**

**Beschreibung**

Die Erfindung betrifft eine Teilnehmeranschlußschaltung mit zwei Auswerteeinrichtungen für die Überwachung des Anreizzustandes, der Teilnehmerschleifenunterbrechungen aufgrund der Wahl und des Auslösens, sowie für die Überwachung des Schleifenschlusses als Folge eines Rufs, die über jeweils einen Spannungsteiler an die Teilnehmeranschlußleitung angeschlossen sind, sowie mit einer Mehrzahl von Speisewiderständen für die Zufuhr der Speisespannung an die Teilnehmeranschlußleitung.

Bei einer bekannten Teilnehmeranschlußschaltung dieser Art (FR-A-2 329 126) sind beide Auswerteeinrichtungen bei der Überwachung sämtlicher Betriebszustände miteinbezogen, in dem sie aufgrund der entsprechenden Potentialverhältnisse entweder beide ihren Ruhezustand, beide ihren Arbeitszustand oder eine von ihnen den Ruhezustand und die andere den Arbeitszustand einnehmen. Bei einer derartigen Lösung kann dem Umstand nicht Rechnung getragen werden, daß bei den einzelnen Betriebszuständen unterschiedliche Anforderungen an die Empfindlichkeit und Auswertesicherheit der Auswerteeinrichtungen zu stellen sind. Insbesondere im Rufzustand besteht ein Interesse daran, möglichst schnell Schleifenschlüsse als Folge eines Rufs erkennen zu können, um daraufhin die Rufsignalspannung abzuschalten, um zu verhindern, daß der Rufsignalstrom zu lange über den Mikrofonstromkreis fließt.

Aufgabe der Erfindung ist es daher, eine Teilnehmeranschlußschaltung anzugeben, bei der die erforderliche Auswertesicherheit bei den einzelnen Betriebszuständen der Teilnehmeranschlußleitung gewährleistet ist, ohne daß hierzu ein allzu großer Aufwand erforderlich ist.

Diese Aufgabe wird erfindungsgemäß mit einer Teilnehmeranschlußschaltung der obengenannten Art gelöst, die dadurch gekennzeichnet ist, daß deren Speisewiderstände je nach Art der vorzunehmenden Überwachung durch Schalter wirksam geschaltet sind, daß bei ihr die Überwachung des Anreizzustandes und der Schleifenunterbrechungen mit derselben einen Auswerteeinrichtung und die Überwachung des Schleifenschlusses als Folge eines Rufs mit der anderen Auswerteeinrichtung vorgenommen werden, wobei zur Umschaltung von der einen Überwachungsart auf die andere das Teilerverhältnis der zugehörigen Spannungsteiler sowie deren Anschaltepunkte an bestimmte Speisewiderstände geändert wird, und daß die Gesamtheit der Spannungsteiler zusammen mit den Speisewiderständen eine Baueinheit bildet.

Aufgrund der erfindungsgemäßen Lösung ist es einerseits möglich, gerade die Überwachung auf Schleifenschluß als Folge eines Rufs so empfindlich wie nötig zu gestalten, andererseits aber nicht mehr den einzelnen Überwachungsarten individuell zugeordnete Schaltungsteile vorsehen zu müssen, als unbedingt erforderlich, womit sich der Aufwand in Grenzen hält. Dadurch, daß die Spannungsteiler zusammen mit den Speisewiderständen eine Baueinheit bilden, ergibt sich eine einheitliche Temperaturabhängigkeit sowie die Möglichkeit einer einheitlichen Abgleichung der Widerstände, was ein weiterer Grund dafür ist, daß auch bei engen Auswertetoleranzen eine sichere Auswertung möglich ist.

Gemäß einer ersten Ausgestaltung der Erfindung ist die genannte Baueinheit in Form einer Schichtschaltung realisiert.

Gemäß einer weiteren Ausgestaltung der Erfindung sind für die Überwachung des Teilnehmerschleifenschlusses als Folge eines Rufs zwei Spannungsteiler mit demselben Teilerverhältnis, die an der an Erdpotential liegenden Ader der Teilnehmeranschlußleitung angeschlossen sind und von denen der eine einen zu seinen übrigen Spannungsteilerwiderständen in Reihe liegenden Kondensator aufweist, sowie ein Koparator vorhanden, dessen beide Eingänge an einen Teilerpunkt jeweils eines anderen der Spannungsteiler angeschlossen sind und außerdem mit einer derartigen Vorspannung beauftragt werden, daß im Falle eines Rufs bei unterbrochener Teilnehmerleitungsschleife der eine Schaltzustand und bei geschlossener Teilnehmerleitungsschleife der andere Schaltzustand eingenommen wird, in dem die Lieferung des Indikationskriteriums erfolgt. Aufgrund dieser Anschaltung des Komparators liegt an dessen beiden Enden jeweils derselbe Wechselspannungsanteil. Es wird also die Rufwechselspannung im Hinblick auf die Auswertung des Schleifenzustandes kompensiert. Dies ist deswegen von Vorteil, weil die Amplitude und Phasenlage der Rufwechselspannung von der Länge der Teilnehmeranschlußleitung abhängig ist und somit die überlagerte Rufwechselspannung die Auswertesicherheit und insbesondere eine schnelle Auswertung beeinträchtigen könnte.

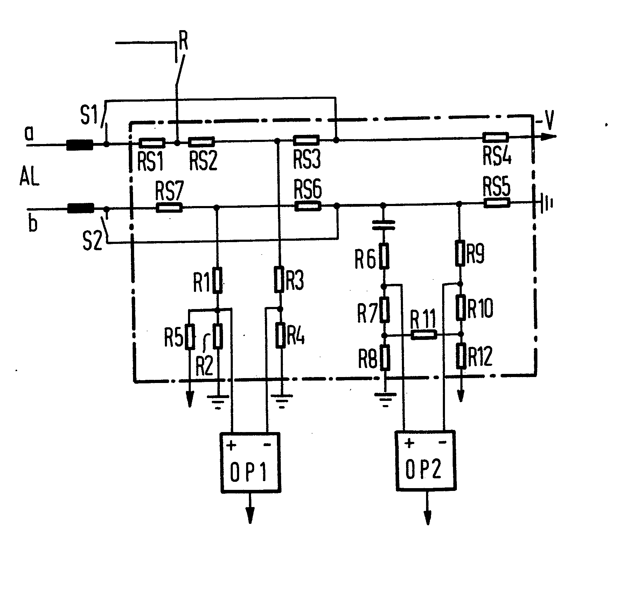

Nachstehend wird die Erfindung anhand eines Ausführungsbeispiels unter Bezugnahme auf die Zeichnung näher erläutert.

Die in der Zeichnung in zum Verständnis der Erfindung erforderlichen Umfang dargestellte Teilnehmeranschlußschaltung TA steht über die Leitungsadern a und b einer Teilnehmeranschlußleitung AL mit einer nicht dargestellten Teilnehmerstation in Verbindung, der sie zugeordnet ist.

Diese Teilnehmeranschlußschaltung enthält u. a. eine Speisebatterie sowie Speisewiderstände RS1 bis RS7, über die die Speisespannung an die Teilnehmeranschlußleitung AL gelegt wird. Die Speisewiderstände RS1 bis RS3 sowie RS6 und RS7 sind jeweils durch Betätigung von Schaltern S1 bzw. S2 überbrückbar. Wenn die Schalter S1 und S2 geschlossen sind, sind daher lediglich noch die Widerstände RS4 und RS5 als Speisewiderstände wirksam geschaltet.

Für die Überwachung des Anreizzustandes, also daraufhin, ob bei der betreffenden Teilnehmerstation ein Verbindungswunsch vorliegt, sowie auch der Teilnehmerschleifenunterbrechungen aufgrund der Wahl und des Auslösens dient eine einzige Auswerteeinrichtung, nämlich ein Komparator in Form des Operationsverstärkers OP1. Der nicht invertierende Eingang des Operationsverstärkers OP1 ist an den Verbindungspunkt der Widerstände R1 und R2 angeschlossen, die einen Spannungsteiler bilden, der zwischen Bezugspotential und dem Verbindungspunkt der Widerstände RS6 und RS7 liegt, über die eine Verbindung der Speisebatterie mit der b-Ader der Teilnehmeranschlußleitung hergestellt wird. Über einen weiteren Widerstand R5, der an Spesebatteriepotential liegt, wird dieser nichtinvertierende Eingang im Hinblick auf eine entsprechende Ansprechschwelle des Operationsverstärkers OP1 entsprechend vorgespannt. Der invertierende Eingang des Operationsverstärkers OP1 ist an den Verbindungspunkt der Widerstände R3 und R4 angeschlossen, die einen Spannungsteiler bilden, der zwischen Bezugspotential und dem Verbindungspunkt der Widerstände RS2 und RS3 liegt, über die eine Verbindung zwischen der Speisebatterie und der a-Ader der Teilnehmeranschlußleitung hergestellt ist.

Zur Überwachung des Teilnehmerschleifenschlusses als Folge eines Rufs dient ein zweiter Komparator in Form eines Operationsverstärkers OP2, dessen beide Eingänge über zwei das gleiche Teilerverhältnis aufweisende Spannungsteiler mit den Widerständen R6 bis R11 zwischen den Speisewiderständen RS5 und RS6 an die Verbindung eines Bezugspotential aufweisenden Schaltungspunktes und der b-Ader der Teilnehmeranschlußleitung angeschlossen sind. Der Spannungsteiler, an den der nicht invertierende Eingang des Operationsverstärkers OP2 angeschlossen ist, enthält einen in Reihe zu seinen übrigen Spannungsteilerwiderständen liegenden Kondensator C. Ferner sind dessen Eingänge über Widerstände R11 und R12 so vorgespannt, daß er bei geöffneter Teilnehmerleitungsschleife den einen und bei geschlossener Teilnehmerleitungsschleife den anderen von zwei Schaltzuständen einnimmt.

Wenn eine Überwachung der Teilnehmeranschlußleitung AL auf den Anreizzustand vorgenommen werden soll, sind die Schalter S1 und S2 geöffnet, was bedeutet, daß sämtliche Speisewiderstände RS1 bis RS7 wirksam geschaltet sind. Wegen der vorerwähnten Vorspannung des Operationsverstärkers OP1 und aufgrund eines entsprechenden Teilerverhältnisses wechselt in diesem Falle der Operationsverstärker seinen Schaltzustand, wenn bei der nicht dargestellten Teilnehmerstation der Handapparat abgehoben und dadurch die Teilnehmerleitungsschleife geschlossen wird. Dieser Übergang von einem Schaltzustand in den anderen wird dann in nicht näher erläuterter Art und Weise als Anreiz für den Verbindungsaufbau dienende Vorgänge ausgenutzt.

Wenn hingegen die Teilnehmerleitungsschleife auf Schleifenunterbrechungen aufgrund der Wahl und beim Auslösen überwacht werden soll, müssen die Schalter S1 und S2 geschlossen sein, sodaß lediglich noch die Speisewiderstände RS4 und RS5 als Speisewiderstände wirksam geschaltet sind. In diesem Falle wirken die als Speisewiderstände nicht ausgenutzten Widerstände RS7, sowie RS1 und RS2 als Teil der Spannungsteiler, an denen die Eingangsspannungen für den Operationsverstärker OP1 abgegriffen werden, so daß ein anderes Teilerverhältnis vorliegt und, wie gewünscht, bei Schleifenunterbrechungen der Operationsverstärker von einem Schaltzustand in den anderen übergeht, was wiederum als Überwachungskriterium ausgenutzt wird.

Auch bei der Überwachung des Schleifenschlusses als Folge eines Rufs sind die Schalter S1 und S2 geschlossen. Beim Übergang von unterbrochener Teilnehmerschleife zur geschlossenen Schleife wechselt dann der Operationsverstärker OP2 seinen Schaltzustand und veranlaßt, daß der über den Kontakt R eingespeiste Rufstrom unterbrochen wird, so daß bei diesem Betriebszustand der Teilnehmerleitungsschleife nicht länger über das Mikrofon der Teilnehmerstation außer dem Speisestrom auch der Rufstrom fließt, da dies bei längerem Andauern zu einer Beschädigung des Mikrofons führen könnte.

Ob ein vom Operationsverstärker OP2 geliefertes Kriterium ausgewertet wird oder nicht, wird vom Vorliegen eines weiteren Kriteriums abhängig gemacht, das lediglich im Rufzustand auftritt, da ein Schaltzustandswechsel dieses Operationsverstärkers ja auch bei Schleifenzustandsänderungen im Zusammenhang mit der Wahl auftreten kann.

Wie in der Figur durch Strichpunktierung dargestellt, bilden die Speisewiderstände RS1 bis RS7 sowie die Widerstände R1 bis R12 der Spannungsteiler eine Baueinheit, was die vorstehend erwähnten Vorteile mit sich bringt und die vorzugsweise als Schichtschaltung aufgebaut ist.

**Ansprüche**

1. Teilnehmeranschlußschaltung mit zwei Auswerteeinrichtungen (OP1, OP2) für die Überwachung des Anreizzustandes, der Teilnehmerschleifenunterbrechungen aufgrund der Wahl und des Auslösens, sowie für die Überwachung des Schleifenschlusses als Folge eines Rufs, die über jeweils eigene Spannungsteiler (R1 bis R4, R6 bis R11) an die Teilnehmeranschlußleitung (AL) angeschlossen sind, sowie mit einer Mehrzahl von Speisewiderständen (RS1 bis RS7) für die Zufuhr der Speisespannung an die Teilnehmeranschlußleitung, dadurch gekennzeichnet, daß die Speisewiderstände (RS1 bis RS7) je nach Art der vorzunehmenden Überwachung durch Schalter (S1, S2) wirksam geschaltet sind, daß die Überwachung des Anreizzustandes und der Schleifenunterbrechungen mit derselben einen Auswerteeinrichtung (OP1) und die Überwachung des Schleifenschlusses als Folge eines Rufs mit der anderen Auswerteeinrichtung (OP2) vorgenommen werden, wobei zur Umschaltung von der einen Überwachungsart auf die andere das Teilerverhältnis der zugehörigen Spannungsteiler sowie deren Anschaltepunkte an bestimmte der Speisewiderstände geändert wird, und daß die Gesamtheit der Spannungsteiler zusammen mit den Speisewiderständen eine Baueinheit bildet.

2. Teilnehmeranschlußschaltung nach Anspruch 1, dadurch gekennzeichnet, daß die genannte Baueinheit eine Schichtschaltung ist.

3. Teilnehmeranschlußschaltung nach einem der Ansprüche 1 oder 2, dadurch gekennzeichnet, daß sie für die Überwachung des Teilnehmerschleifenschlusses als Folge eines Rufs zwei Spannungsteiler (R6 bis R11, C) mit demselben Teilerverhältnis, die an der an Erdpotential liegenden Ader (b) der Teilnehmeranschlußleitung (AL) angeschlossen sind und von denen der eine einen zu seinen übrigen Spannungsteilerwiderständen in Reihe liegenden Kondensator (C) enthält, sowie einen Komparator (OP2) aufweist, dessen beide Eingänge an einen Teilerpunkt jeweils eines anderen der Spannungsteiler angeschlossen sind und außerdem mit einer derartigen Vorspannung beaufschlagt werden, daß im Falle eines Rufs bei unterbrochener Teilnehmeranschlußleitung (AL) der eine Schaltzustand und bei geschlossener Teilnehmeranschlußleitung der andere Schaltzustand eingenommen wird, der im Rufzustand als Schleifenschlußkriterium gewertet wird.

## Claims

1. A subscriber connection circuit with two analysing devices (OP1, OP2) for monitoring the energisation state, the subscriber loop interruptions as a result of dialling and clearance, and for monitoring the loop closure as a result of a call, which are respectively connected via individual voltage dividers (R1 to R4, R6 to R11) to the subscriber connection line (AL), and with a plurality of feed resistors (RS1 to RS7) for supplying the feed voltage to the subscriber connection line, characterised in that the feed resistors (RS1 to RS7) are actuated by switches (S1, S2) in accordance with the nature of the monitoring which is to be effected, that the monitoring of the energisation state and of the loop interruptions is carried out using the same first analysing device (OP1) whereas the monitoring of the loop closure as a result of a call is carried out using the other analysing device (OP2) where, in order to switch over from the one type of monitoring to the other, a change is made in the divider ratio of the associated voltage dividers and their connection points to certain of the feed resistors, and that the voltage dividers together with the feed resistors form one structural unit.

2. A subscriber connection circuit as claimed in claim 1, characterised in that the aforementioned structural unit is a layer circuit.

3. Subscriber connection circuit as claimed in one of the claims 1 or 2, characterised in that, for the monitoring of the subscriber loop closures as a result of a call, it has two voltage dividers (R6 to R11, C) having the same divider ratio which are connected to that wire (b) of the subscriber connection line (AL) which is connected to earth potential and of which one includes a capacitor (C) arranged in series with its other voltage divider resistors, and further has a comparator (OP2) whose two inputs are each connected to a divider point of a respective other of the voltage dividers and are also supplied with a bias voltage which is such that in the event of a call when the subscriber connection line (AL) is interrupted the first switching state is assumed and when the subscriber connection line is closed the other switching state is assumed which is evaluated in the calling state as a loop closure criterion.

## Revendications

1. Circuit pour ligne d'abonné, avec deux dispositifs d'évaluation (OP1, OP2) pour le contrôle de l'état d'excitation, des interruptions de boucles d'abonnés sur la base de la sélection et du déclenchement, de même que pour le contrôle de la fermeture de la boucle comme conséquence d'un appel, qui sont respectivement reliés à la ligne d'abonné (AL) par l'intermédiaire de diviseurs de tension (R1 à R4, R6 à R11) qui leur sont propres, et avec une pluralité de résistances d'alimentation (RS1 à RS7) pour l'alimentation de la ligne d'abonné en tension d'alimentation, caractérisé par le fait que les résistances d'alimentation (RS1 à RS7) sont, en fonction du genre de contrôle à effectuer, commutées dans leur position efficace par des commutateurs (S1, S2), que le contrôle de l'état d'excitation et des interruptions de la boucle est effectué avec un seul et même dispositif d'évaluation (OP1) et que le contrôle de la fermeture de la boucle qui est le résultat d'un appel est effectué avec l'autre dispositif d'évaluation (OP2), alors que pour la commutation de l'un à l'autre des genres de contrôle, le rapport de division des diviseurs de tension associés de même que leur point de branchement à des résistances d'alimentation déterminées sont modifiés et que la totalité des diviseurs de tension forment, avec les résistances d'alimentation, une unité de construction.

2. Circuit pour ligne d'abonné selon la revendication 1, caractérisé par le fait que ladite unité de construction est un circuit à couche.

3. Circuit pour ligne d'abonné selon l'une des revendications 1 ou 2, caractérisé par le fait qu'il comporte pour le contrôle de la fermeture de la boucle d'abonné, comme conséquence d'un appel, deux diviseurs de tension (R6 à R11, C) de même rapport de division, qui sont reliés au fil (b) de la ligne d'abonné (AL), qui est au potentiel terre, et parmi lesquels l'un présente un condensateur (C) en série avec ses autres résistances de diviseur de tension, ainsi qu'un comparateur (OP2) dont les deux entrées sont respectivement reliées à un point de division d'un autre diviseur de tension et sont en outre chargées avec une tension de polarisation qui est telle que dans le cas d'un appel avec la ligne d'abonné (AL) interrompue, c'est un premier état de commutation qui est assumé, alors que dans le cas d'un appel avec la ligne d'abonné (AL) fermée, c'est l'autre état de commutation qui est assumé, lequel est évalué, dans l'état d'un appel, comme constituant un critère de fermeture de la boucle.